# EUROPÄISCHE PATENTSCHRIFT

(11) **EP 1 229 989 B1**
(45) Veröffentlichungstag und Bekanntmachung des Hinweises auf die Patenterteilung: **07.07.2004**
(21) Anmeldenummer: 00966120.8
(22) Anmeldetag: 05.10.2000
(51) Int. Cl.: B01D 46/46, B01D 46/44

(54) **FILTERGERÄT ZUM FILTERN VON DRUCKLUFT**
FILTERING APPARATUS FOR FILTERING COMPRESSED AIR
APPAREIL DE FILTRATION POUR FILTRER DE L'AIR COMPRIME

(30) Priorität: 28.10.1999 DE 19951962
(43) Veröffentlichungstag der Anmeldung: 14.08.2002
(73) Patentinhaber: FESTO AG & Co, 73734 Esslingen (DE)
(72) Erfinder: FRANZ, Jochen, 72762 Reutlingen (DE); GEBAUER, Günter, 73728 Esslingen (DE)
(74) Vertreter: Abel, Martin, Dipl.-Ing.
(86) Internationale Anmeldenummer: PCT/EP2000/009747
(87) Internationale Veröffentlichungsnummer: WO 2001/030484

(56) Entgegenhaltungen:
- EP-A- 0 788 826
- EP-A- 0 841 083
- DE-A- 19 607 740
- US-A- 4 751 501
- US-A- 5 511 413
- US-A- 5 606 311

## Beschreibung

Die Erfindung betrifft ein Filtergerät zum Filtern von Druckluft, mit einem zwischen einem Einlass und einem Auslass verlaufenden Fluid-Hauptkanal, der durch eine im Betrieb von Druckluft durchströmte Filtereinrichtung in einen Zuströmabschnitt und einen Abströmabschnitt unterteilt wird, und mit Mitteln zur Erkennung des Verschmutzungsgrades der Filtereinrichtung, die eine den Differenzdruck zwischen dem Zuströmabschnitt und dem Abströmabschnitt erfassende Differenzdrucksensoreinrichtung und eine die Durchflussrate im Fluid-Hauptkanal erfassende Durchfluss-Sensoreinrichtung enthalten, und die über eine die erfassten Differenzdruck- und Durchflusswerte zu einem für den Verschmutzungsgrad der Filtereinrichtung relevanten und mit vorgegebenen Grenzwerten zu vergleichenden Zustandswert verknüpfende elektronische Auswerteeinrichtung verfügen.

Ein Filtergerät dieser Art geht beispielsweise aus der EP-A-0 841 083 oder der US-A-4 751 501 hervor. Es ist mit Mitteln ausgestattet, die ein Erkennen des Verschmutzungsgrades der Filtereinrichtung unter Einbeziehung einer Differenzdruck-Sensoreinrichtung und einer Durchfluss-Sensoreinrichtung ermöglichen. Die Filtereinrichtung sitzt im Falle der US-A-4 751 501 unmittelbar in einem Gehäuse, das einen Druckschalter trägt, der zum Vergleichen des Filter-Innendruckes mit dem Atmosphärendruck dient.

Eine ähnliche Anordnung offenbart die US-A-5 606 311, wobei dort allerdings ein Differenzdruck zwischen dem dem Filter nachgeschalteten Kanalabschnitt und der Umgebung gemessen wird.

Aus dem "Pneumatic-Katalog 97/98", Seite 9.3/15-1, der Anmelderin gehen Filtergeräte hervor, die ein Gehäuse mit einem den Einlass und Auslass aufweisenden Grundköper und einer lösbar daran fixierten gefäßartigen Filterschale enthalten. In dem zwischen dem Grundkörper und der Filterschale definierten Raum sitzt eine auswechselbare und vorzugsweise patronenartige Filtereinrichtung, die den zwischen dem Einlass und dem Auslass verlaufenden Fluid-Hauptkanal in einen dem Einlass zugeordneten Zuströmabschnitt und einen dem Auslass zugeordneten Abströmabschnitt unterteilt. Über den Einlass zugeführte Druckluft wird beim Hindurchströmen durch die Filtereinrichtung von Verunreinigungen gesäubert. Ihren überwiegenden Einsatz finden diese Filtergeräte bei der Aufbereitung von Druckluft in Druckluftnetzen, wobei sie meist als Bestandteil sogenannter Wartungseinheiten eingesetzt werden, die noch über weitere Komponenten wie Regler oder Öler verfügen können. Bei zu starker Verschmutzung der eingesetzten Filtereinrichtung erfolgt ein Austausch, um an das zugeordnete Druckluftnetz angeschlossene Maschinen und Geräte ohne Beeinträchtigungen weiter betreiben zu können.

Es ist die Aufgabe der vorliegenden Erfindung, ein Filtergerät der eingangs genannten Art zu schaffen, bei dem sich der ein Auswechseln oder Reinigen der Filtereinrichtung empfehlende Zeitpunkt zuverlässig ermitteln lässt.

Ein diese Aufgabe lösendes Filtergerät besitzt ein Gehäuse mit einem den Einlass und den Auslass aufweisenden Grundkörper, an dessen Unterseite unter Abdichtung lösbar eine Filterschale angeordnet ist, die gemeinsam mit dem Grundkörper einen die Filtereinrichtung aufnehmenden Filterraum begrenzt, wobei oben auf den Grundkörper ein die Differenzdrucksensoreinrichtung enthaltendes Kopfstück aufgesetzt ist.

Die Erkennungsmittel für den verschmutzungsgrad der eingesetzten Filtereinrichtung verarbeiten sowohl den Differenzdruck zwischen dem Zuströmabschnitt und dem Abströmabschnitt des Fluid-Hauptkanals als auch die momentane Durchflussrate durch den Fluid-Hauptkanal, wobei die erfassten Werte in einer elektronischen Auswerteeinrichtung zu einem für den Verschmutzungsgrad relevanten Zustandswert verknüpft werden, der sich anschließend mit vorgegebenen Grenzwerten vergleichen lässt. Die vergleichsmaßnahmen könnten prinzipiell zwar extern vorgenommen werden, beispielsweise durch Vergleich mit vorgegebenen Referenztabellen, finden jedoch vorzugsweise ebenfalls in der elektronischen Auswerteeinrichtung statt, die zu diesem Zweck über eine Vergleichseinrichtung verfügen kann.

Durch Berücksichtigung sowohl des Differenzdruckes als auch der Durchflußrate läßt sich der Verschmutzungsgrad unter Berücksichtigung der momentanen Betriebsbedingungen ermitteln, wobei Berücksichtigung findet, daß sich der Differenzdruck in Abhängigkeit von der gegebenen Durchflußrate verändert. Würde man allein den Differenzdruck zur Erkennung des Verschmutzungsgrades heranziehen, ließe dies zwar im Zusammenhang mit einer unveränderlich feststehenden Durchflußrate auch schon gewisse Rückschlüsse auf den Verschmutzungsgrad zu. Treten jedoch im Betrieb eines Druckluftnetzes, bedingt durch Hinzuschalten oder das Abschalten von Verbrauchern, Änderungen in der Durchflußrate auf, würde dies bei starrer Vorgabe allein eines Differenzdruck-Grenzwertes zu fehlerhaften Angaben führen. Indem zusätzlich die Durchflußrate mit berücksichtigt wird, kann somit unabhängig vom Durchfluß rechtzeitig erkannt werden, daß ein kritischer Verschmutzungsgrad erreicht wurde.

Vorteilhafte Weiterbildungen der Erfindung gehen aus den Unteransprüchen hervor.

Die elektronische Auswerteeinrichtung enthält zweckmäßigerweise eine Speichereinrichtung zum Abspeichern mindestens einem Filtereinrichtungstyp zugeordneter Grenzwerte. Ist das Filtergerät zur Verwendung mit lediglich einem einzigen, ganz bestimmten Filtereinrichtungstyp ausgelegt, können sich die Grenzwerte an diesem einen Filtereinrichtungstyp orientieren. Alternativ können aber in der Speichereinrichtung auch Grenzwerte für mehrere unterschiedliche Filtereinrichtungstypen abgespeichert sein, wobei eine Auswahleinrichtung vorhanden ist, die in Abhängigkeit vom tatsächlich installierten Filtereinrichtungstyp eine typspezifische Grenzwertselektion ermöglicht. Dies kann beispielsweise durch manuelle Vorgaben erfolgen, insbesondere durch eine Schalteranordnung und/oder durch eine Potentiometeranordnung. Komfortabler ist jedoch eine Bauform, bei der das Filtergerät zusätzlich eine Detektionseinrichtung aufweist, die über Mittel zur Erkennung des momentan installierten Filtereinrichtungstyps verfügt und die ein filtereinrichtungstyspezifisches elektrisches Detektionssignal hervorrufen kann, das in der Auswahleinrichtung für die typspezifische Grenzwertselektion herangezogen werden kann. Die Detektionseinrichtung kann beispielsweise über an der Filtereinrichtung vorgesehene Aktivierungsmittel verfügen, die bei installierter Filtereinrichtung zur Erzeugung eines Detektionssignales direkt oder indirekt mit gehäuseseitigen Sensormitteln zusammenarbeiten.

Eine noch universellere Betriebsweise ermöglicht das Filtergerät, wenn die Mittel zur Erkennung des Verschmutzungsgrades zusätzlich eine den im Zuströmabschnitt des Fluid-Hauptkanals herrschenden Eingangsdruckwert erfassende Eingangsdruck-Sensoreinrichtung enthalten, wobei der ermittelte Eingangsdruckwert in der elektronischen Auswerteeinrichtung bei der Ermittlung des momentanen Zustandswertes berücksichtigt wird. In diesem Falle werden bei der Ermittlung der kritischen Verschmutzungswerte auch die aktuellen Druckverhältnisse berücksichtigt, wobei vorgesehen sein kann, daß in einer Speichereinrichtung für einen oder mehrere Filtereinrichtungstypen jeweils eingangsdruckabhängig unterschiedliche Grenzwerte abgespeichert sind, die unter Vermittlung einer Auswahleinrichtung eingangsdruckabhängig selektierbar sind.

Von Vorteil ist es, wenn sich die einer jeweiligen Filtereinrichtung zugeordneten Grenzwerte variabel vorgeben lassen, so daß man bei Bedarf in der Lage ist, Anpassungen vorzunehmen oder mit Bezug auf weitere Filtereinrichtungstypen spezifische Grenzwerte vorzugeben.

Das Filtergerät kann desweiteren über eine Meldeeinrichtung verfügen, die den aktuellen Zustandswert des Verschmutzungsgrades und/oder das Erreichen oder Überschreiten der einer Filtereinrichtung zugeordneten Grenzwerte meldet. Die Meldung kann beispielsweise optisch oder akustisch erfolgen und/oder durch Ausgabe eines elektrischen Meldesignals, das sich nach Bedarf verarbeiten läßt. Die Grenzwerte für eine jeweilige Filtereinrichtung können insbesondere in Gestalt einer Grenzwert-Kennlinie oder eines Grenzwert-Kennlinienfeldes vorliegen.

Bei Bedarf kann zusätzlich ein vorgegebener Grenzwert in Form eines durchflußunabhängigen maximalen Differenzdruckwertes vorliegen, der beispielsweise einem Zustand entspricht, bei dem eine rentable Betriebsweise nicht mehr möglich ist.

Die Auswerteeinrichtung könnte extern vom Filtergerät vorgesehen sein. Zugunsten kompakter Abmessungen empfiehlt sich jedoch eine Ausgestaltung der Auswerteeinrichtung als unmittelbarer Bestandteil des Filtergerätes oder einer das Filtergerät enthaltenden Druckluft-Wartungseinheit. Jedenfalls kann die Auswerteeinrichtung in eine Steuereinrichtung integriert sein, die gewisse Maschinen- oder Geräteabläufe steuert.

Nachfolgend wird die Erfindung anhand der beiliegenden Zeichnung näher erläutert. In dieser zeigen:
- Figur 1: eine bevorzugte Ausführungsform des erfindungsgemäßen Filtergerätes in perspektivischer Explosionsdarstellung,

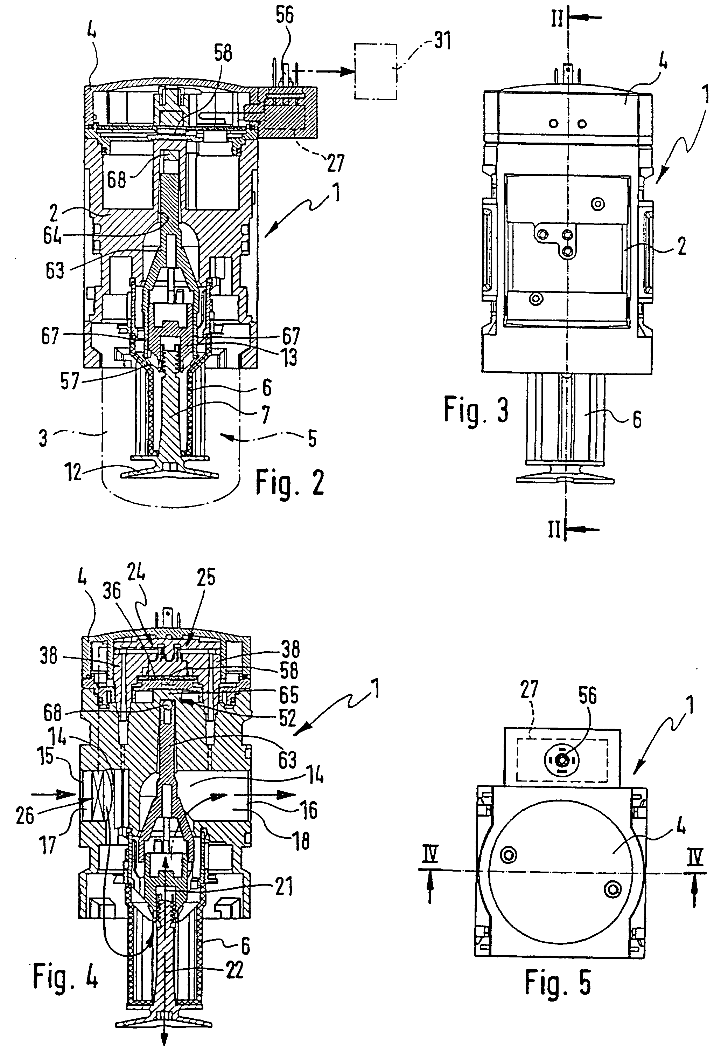

- Figur 2: das Filtergerät aus Figur 1 im Längsschnitt gemäß Schnittlinie II-II aus Figuren 1 und 3,
- Figur 3: eine Seitenansicht des Filtergerätes mit Blickrichtung gemäß Pfeil III aus Figur 1,
- Figur 4: eine weitere Längsschnittdarstellung des Filtergerätes gemäß Schnittlinie IV-IV aus Figur 1 mit einer zur Darstellung der Figur 2 rechtwinkeligen Schnittebene,
- Figur 5: eine Draufsicht auf das Filtergerät mit Blickrichtung gemäß Pfeil V aus Figur 1,
- Figur 6: eine stark schematisierte Darstellung des Filtergerätes zur Erläuterung eines vorteilhaften Aufbaues der elektronischen Auswerteeinrichtung, und
- Figur 7: ein Diagramm, das die Wirkungsweise der zur Erkennung des Verschmutzungsgrades der Filtereinrichtung dienenden Mittel deutlich macht, wobei der Druckabfall Δp in Abhängigkeit von der Durchflußrate q aufgetragen ist, und zwar bei einer dem Neuzustand einer Filtereinrichtung wiedergebenden Zustandswert-Kennlinie "a" und mit Darstellung einer die vorgegebenen Grenzwerte repräsentierenden Grenzwert-Kennlinie "b".

Das insgesamt mit Bezugsziffer 1 versehene Filtergerät enthält ein Gehäuse mit einem beispielsweise quaderähnlichen Grundkörper 2, eine an dessen Unterseite unter Abdichtung lösbar angebrachte becherähnliche Filterschale 3 und ein oben auf den Grundkörper 2 aufgesetztes Kopfstück 4.

Die Filterschale 3 begrenzt gemeinsam mit dem Grundkörper 2 einen Filterraum 5, in dem, entnehmbar, eine patronenartige Filtereinrichtung 6 aufgenommen ist.

Die einen hohlzylinderähnlichen Aufbau besitzende Filtereinrichtung 6 ist in ihrer Axialrichtung von unten her an den Grundkörper 2 angesetzt und lösbar an diesem befestigt. Zur Befestigung dient vorliegend eine Befestigungsschraube 7, die von unten her durch den zentralen Hohlraum 8 der Filtereinrichtung 6 hindurchgesteckt ist, wobei sie die Filtereinrichtung 6 von unten her mit einem Teller 12 beaufschlagt und mit ihrem oberen Ende in das Innengewinde eines fest mit dem Grundkörper 2 verbundenen Befestigungsteils 13 eingeschraubt ist. Letzteres ist beim Ausführungsbeispiel als separates Bauteil am Grundkörper 2 befestigt und hat einen hülsenähnlichen Aufbau.

Das Filtergerät 1 ist von einem Fluidhauptkanal 14 durchsetzt, der über einen Einlaß 15 und einen Auslaß 16 verfügt, die beide, zweckmäßigerweise an einander entgegengesetzten Außenseiten, am Grundkörper 2 vorgesehen sind. Einlaß 15 und Auslaß 16 sind nicht näher dargestellte Verbindungsmittel zugeordnet, die eine lösbare Verbindung mit weiterführenden Fluidleitungen ermöglichen. Das Filtergerät 1 wird im Betrieb von Druckluft durchströmt, die über die erwähnten Fluidleitungen in den Einlaß 15 eingespeist und über den Auslaß 16 abgeführt wird.

Die Filtereinrichtung 6 ist in den Verlauf des Fluid-Hauptkanals 14 eingeschaltet und unterteilt diesen in einen dem Einlaß 15 zugeordneten Zuströmabschnitt 17 und einen dem Auslaß 16 zugeordneten Abströmabschnitt 18. Der Zuströmabschnitt 17 erstreckt sich im Bereich des Außenumfanges der Filtereinrichtung 6 in den Filterraum 5 hinein, während der Abströmabschnitt 18 mit dem Hohlraum 8 der Filtereinrichtung 6 in Verbindung steht. Die einströmende Druckluft durchströmt somit die Filtereinrichtung 6 im Innern des Filterraumes 5 von außen nach innen und tritt über den Hohlraum 8 und den Abströmabschnitt 18 über den Auslaß wieder aus. Beim Hindurchströmen durch die Filtereinrichtung 6 wird die Druckluft gefiltert und von Verunreinigungen befreit, die in der Filtereinrichtung 6 zurückbleiben.

Die Strömungsrichtung könnte auch umgekehrt sein. In der Regel wird man die Strömungsrichtung der Luft vom Typ der verwendeten Filtereinrichtung 6 abhängig machen.

Das Filtergerät 1 läßt sich als zur Druckluftaufbereitung dienendes Wartungsgerät bezeichnen, das in den Verlauf eines Druckluftnetzes eingeschaltet wird. Es kann wie geschildert als Einzelgerät Verwendung finden. Möglich ist aber auch eine kombinierte Verwendung zusammen mit einem oder mehreren weiteren Wartungsgeräten, beispielsweise einem Reglergerät und/oder einem Ölergerät, wobei es mit diesen weiteren Geräten modulartig zu einer Wartungseinheit zusammengefaßt sein kann. Weitere Wartungsgeräte können an den den Einlaß 15 und Auslaß 16 aufweisenden Außenseiten anstelle der oben erwähnten Fluidleitungen angesetzt werden.

Durch die zurückgehaltenen Verunreinigungen setzen sich die Filterporen der Filtereinrichtung 6 allmählich zu, die Filtereinrichtung 6 verschmutzt. Rechtzeitig bevor die durch die Filtereinrichtung 6 zugelassene Durchströmrate der Druckluft, also die pro Zeiteinheit hindurchströmende Luftmenge, unter ein kritisches Maß fällt, das insbesondere von den an das Druckluftnetz angeschlossenen Verbrauchern abhängt, sollte die Filtereinrichtung 6 gereinigt oder durch eine unverschmutzte neue Filtereinrichtung 6 ausgetauscht werden. Die hierzu notwendige Deinstallation der Filtereinrichtung 6 geschieht durch Entfernen der Filterschale 3 und der Befestigungsschraube 7, wonach die Filtereinrichtung 6 in einer mit ihrer Längsachse zusammenfallenden Deinstallationsrichtung 22 nach unten hin abgenommen werden kann. Die anschließende erneute Montage erfolgt in umgekehrter Reihenfolge, wobei die Installationsrichtung 21 der Filtereinrichtung 6 entgegengesetzt zur Deinstallationsrichtung 22 nach oben orientiert ist.

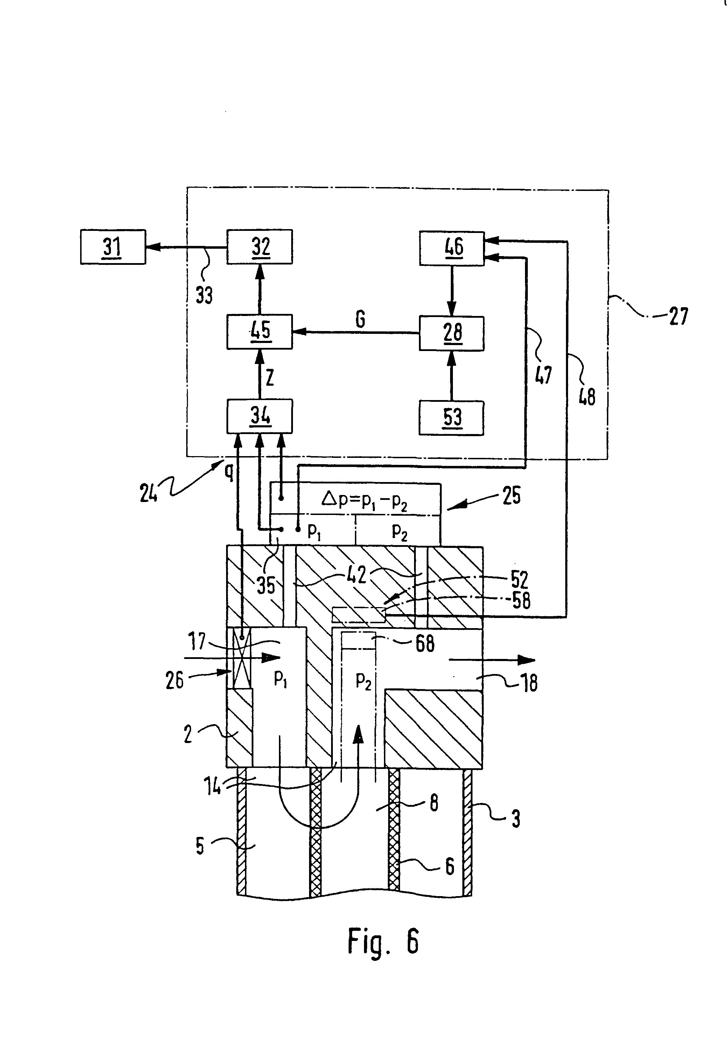

Zum Erhalt des für den Austausch bzw. die Reinigung der Filtereinrichtung 6 angemessenen Zeitpunktes ist das Filtergerät mit Mitteln zur Erkennung des Verschmutzungsgrades der Filtereinrichtung 6 ausgestattet, die nachfolgend vereinfacht als Erkennungsmittel 24 bezeichnet werden. Bezugnehmend auch auf Figur 6, enthalten die Erkennungsmittel 24 eine den Differenzdruck Δp zwischen dem Zuströmabschnitt 17 und dem Abströmabschnitt 18 des Fluid-Hauptkanals 14 erfassende Differenzdruck-Sensoreinrichtung 25 und eine die Durchflußrate im Fluid-Hauptkanal 14 erfassende Durchfluß-Sensoreinrichtung 26. Ferner verfügen die Erkennungsmittel 24 über eine elektronische Auswerteeinrichtung 27, in der die erfaßten Differenzdruck- und Durchflußwerte zu einem für den Verschmutzungsgrad der Filtereinrichtung 6 relevanten Zustandswert "Z" verknüpft und mit in einer Speichereinrichtung 28 abgelegten Grenzwerten "G" verglichen wird. Eine ebenfalls zur elektronischen Auswerteeinrichtung 27 gehörende Meldeeinrichtung 32 ist in der Lage, den aktuell ermittelten Zustandswert und/oder das Erreichen oder Überschreiten der der betreffenden Filtereinrichtung zugeordneten Grenzwerte zu melden. Die Meldung könnte optisch und/oder akustisch erfolgen, geschieht vorliegend allerdings durch Ausgabe eines in einer elektronischen Steuereinrichtung 31 weiterverarbeitbaren elektrischen Meldesignals 33.

Die abgespeicherten Grenzwerte sind auf der gleichen Basis gebildet wie die Zustandswerte, also unter Einbeziehung von Differenzdruck- und Durchflußwerten.

Die Differenzdruck-Sensoreinrichtung 25 ist beim Ausführungsbeispiel so ausgelegt, daß sie sowohl den im Zuströmabschnitt herrschenden Eingangsdruckwert p₁ als auch den im Abströmabschnitt 18 herrschenden Ausgangsdruckwert p₂ erfaßt und daraus den an der Filtereinrichtung 6 anstehenden Differenzdruck Δp = p₁ - p₂ ermittelt. Dieser Differenzdruckwert Δp wird ebenso wie der zugehörige Durchflußwert q innerhalb einer Verknüpfungseinrichtung 34 der elektronischen Auswerteeinrichtung 27 zu einem aktuellen Zustandswert "Z" verknüpft, wobei bei der Verknüpfung vorzugsweise auch der ermittelte Eingangsdruckwert p₁ in eigenständiger Form berücksichtigt wird. Die Funktion der entsprechenden Eingangsdruck-Sensoreinrichtung 35 wird der Einfachheit halber von der Differenzdruck-Sensoreinrichtung 25 übernommen, wenngleich auch eine separate Sensoreinrichtung vorgesehen sein könnte.

Die Differenzdruck-Sensoreinrichtung 25 ist beim Ausführungsbeispiel im Innern des Kopfstückes 4 untergebracht. Sie sitzt auf einer zweckmäßigerweise als Leiterplatte ausgeführten Trägerplatte 36, die an der Innenseite eines Bodenteils 37 des Kopfstückes 4 angeordnet ist, mit dem das Kopfstück 4 auf dem Grundkörper 2 sitzt. Mit internen Fluidkanälen versehene Umlenkteile 38 der Differenzdruck-Sensoreinrichtung 25 durchgreifen das Bodenteil 37 und tauchen unter Abdichtung in zwei im Grundkörper 2 verlaufende Verbindungskanäle 42 ein, deren einer mit dem Zuströmabschnitt 17 und deren anderer mit dem Abströmabschnitt 18 verbunden ist. Auf diese Weise gelangen die Drucksignale zur Differenzdruck-Sensoreinrichtung 25, die somit in vorteilhafter Weise außerhalb des Grundkörpers 2 angeordnet werden kann.

Ein unter Abdichtung auf das Bodenteil 37 aufgesetztes Deckelteil 43 des Kopfstückes 4 sorgt dafür, daß die Differenzdruck-Sensoreinrichtung 25 geschützt untergebracht ist.

Die Durchfluß-Sensoreinrichtung 26 ist beim Ausführungsbeispiel im Zuströmabschnitt 17 des Fluid-Hauptkanals 14 untergebracht, könnte aber auch an anderer Stelle des Fluid-Hauptkanals 14 plaziert oder in Gestalt einer bezüglich des Filtergerätes 1 separat installierten Einrichtung ausgeführt sein. Die integrierte Bauform ermöglicht die Realisierung kompakter Abmessungen bei geringstem anschlußtechnischem Aufwand.

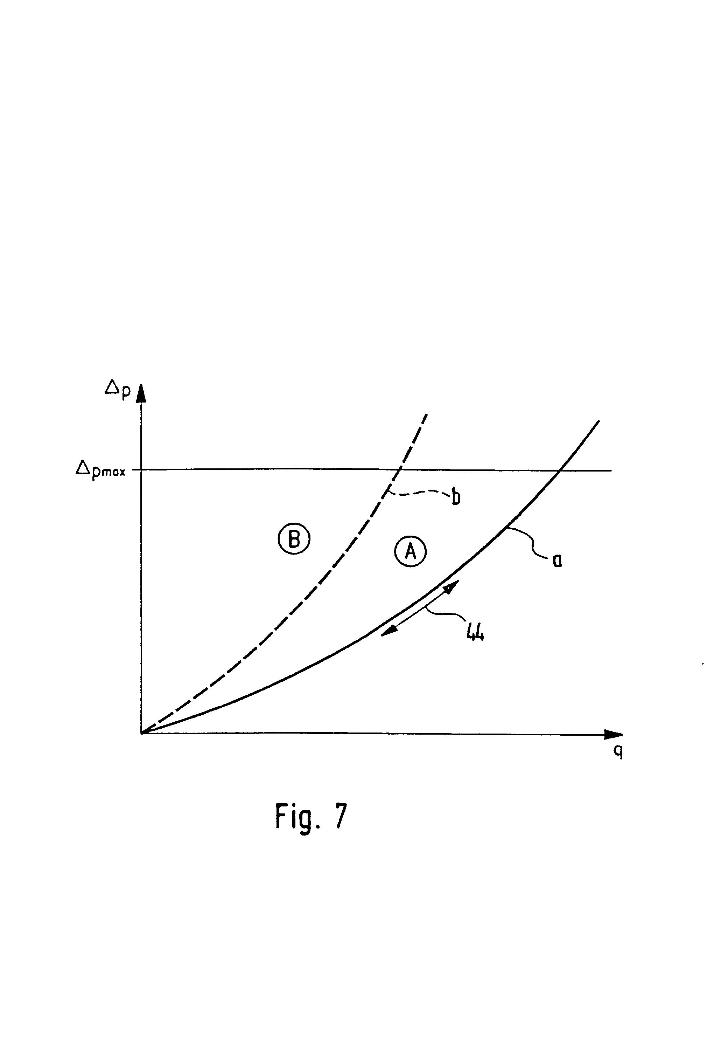

Für den Fall, daß das Filtergerät 1 nur für einen ganz bestimmten Filtereinrichtungstyp ausgelegt ist und ein Betrieb nur mit einem ganz bestimmten Eingangsdruck p₁ stattfindet, können die zugeordneten Grenzwerte "G" in Gestalt einer Grenzwertkennlinie in der Speichereinrichtung 28 abgelegt sein. Eine solche Grenzwertkennlinie "b" ist in Figur 7 exemplarisch in gestrichelten Linien aufgetragen und gibt die zulässigen Differenzdruckwerte Δp als Funktion von der Durchflußrate q an. Desweiteren zeigt die Figur 7 die sich bei der Filtereinrichtung 6 des betreffenden Typs einstellende Zustandswert-Kennlinie "a" bei unverschmutzter Filtereinrichtung. Die in der Verknüpfungseinrichtung 34 ermittelten Zustandswerte "Z" liegen also bei unverschmutzter Filtereinrichtung 6 auf dieser Zustandswert-Kennlinie, auf der sie in Abhängigkeit vom Durchfluß gemäß dem angedeuteten Doppelpfeil 44 wandern.

Die Auswerteeinrichtung 27 enthält eine Vergleichseinrichtung 45, in der der momentan ermittelte Zustandswert "Z" mit den in der Speichereinrichtung 28 abgelegten Grenzwerten "G" verglichen wird. Solange sich dabei die ermittelten Zustandswerte im zulässigen Bereich A befinden - in Figur 7 ist dies der unterhalb der Grenzwertkennlinie "b" liegende Bereich - liegt der Normalbetrieb des Filtergerätes 1 vor, wobei allerdings schon hier die Möglichkeit besteht, den aktuellen Zustandswert "Z", eventuell auch mit Gegenüberstellung des oder der zugehörigen Grenzwerte "G", zu Kontrollzwecken über die Meldeeinrichtung 32 auszugeben. Zweckmäßiger ist es jedoch, die Maßnahmen so zu treffen, daß durch die Meldeeinrichtung 32 erst dann ein Meldesignal 33 ausgegeben wird, wenn der aktuell ermittelt Zustandswert "Z" die Grenzwertkennlinie "b" erreicht oder zu dem oberhalb der Grenzwertkennlinie "b" liegenden unzulässigen Bereich B überschreitet.

Indem zum Erkennen des Verschmutzungsgrades sowohl bei der Erfassung des momentanen Zustandswertes als auch innerhalb der gespeicherten Grenzwerte die Abhängigkeiten zwischen dem Differenzdruck Δp und der momentanen Durchflußrate q berücksichtigt werden, lassen sich unabhängig von der betriebsbedingt momentan vorliegenden Durchflußrate sehr zuverlässige Aussagen treffen. Wäre als Grenzwert beispielsweise nur ein durchflußunabhängiger Differenzdruckwert angegeben, so könnte dieser zwar für einen vorgegebenen größeren Volumenstrom relevant sein, für einen geringeren Volumenstrom jedoch viel zu hoch liegen, so daß die Grenzwerteüberschreitung zu spät erkannt würde. Gleichwohl kann es zweckmäßig sein, zusätzlich einen Grenzwert in Form eines durchflußunabhängigen maximalen Differenzdruckwertes Δₚmax vorzusehen, der bei allen Betriebsbedingungen denjenigen Grenzbereich angibt, bei dem jeder weitere Betrieb der Filtereinrichtung unzweckmäßig ist.

Ist das Filtergerät 1 wie vorliegend für einen Betrieb mit variablem Eingangsdruck p₁ ausgelegt, kann in der Speichereinrichtung 28 ein umfangreiches Grenzwert-Kennlinienfeld abgespeichert sein, das für jeden oder für ausgewählte Eingangsdrücke die betreffende Grenzwertkennlinie beinhaltet. In einem solchen Fall ist die Auswerteeinrichtung 27 zweckmäßigerweise mit einer Auswahleinrichtung 46 ausgestattet, mit der sich druckabhängig die richtige Grenzwertkennlinie auswählen läßt. Die eingangsdruckabhängige Selektion kann manuell oder vorzugsweise selbsttätig erfolgen, wobei im letzteren Fall von der Eingangsdruck-Sensoreinrichtung 35 ein erstes Selektionssignal 47 abgeleitet und der Auswahleinrichtung 46 zugeführt werden kann.

In Abhängigkeit vom Anwendungsfall kann das vorliegende Filtergerät mit unterschiedlichen Typen von Filtereinrichtungen 6 betrieben werden, also mit Filtereinrichtungen unterschiedlicher Baugröße, unterschiedlichen Aufbaus, unterschiedlicher Filterfeinheit etc. Die Erkennungsmittel 24 sind daher so ausgelegt, daß sie bei der Bestimmung des Verschmutzungsgrades den unterschiedlichen Filtereinrichtungstypen Rechnung tragen. Dies geschieht beispielsgemäß dadurch, daß in der Speichereinrichtung 28 Grenzwerte für alle im Zusammenhang mit dem Filtergerät betreibbaren Filtereinrichtungstypen abgespeichert sind, vorzugsweise in Gestalt eines Grenzwert-Kennlinienfeldes, wobei die Auswahleinrichtung 46 dahingehend ausgelegt ist, daß über sie eine typspezifische Grenzwertselektion möglich ist. Zu diesem Zweck kann die Auswahleinrichtung 46 manuell betätigbar ausgeführt sein und beispielsweise eine Schalteranordnung und/oder eine Potentiometeranordnung enthalten, durch die die gewünschte Voreinstellung erfolgen kann, beispielsweise ab Werk oder durch den Benutzer selbst. Wesentlich komfortabler ist jedoch die beim Ausführungsbeispiel realisierte Bauform, bei der die typspezifische Auswahl durch eine elektrisches zweites Selektionssignal 48 hervorgerufen wird, das durch eine später noch im Detail beschriebene Detektionseinrichtung 52 erzeugt wird, die mit Mitteln zur Erkennung des momentan installierten Filtereinrichtungstyps ausgestattet ist.

Es versteht sich, daß im Zusammenhang mit den vom Filtereinrichtungstyp abhängigen Grenzwerten auch eingangsdruckabhängige Grenzwertkennlinien der oben bereits geschilderten Art in der Speichereinrichtung 28 abgelegt sein können.

Die elektronische Auswerteeinrichtung 27 enthält beim Ausführungsbeispiel letztlich auch noch eine elektronische Vorgabeeinrichtung 53, mit der sich die einer jeweiligen Filtereinrichtung zugeordneten Grenzwerte in variabler Weise vorgeben lassen, um bei Bedarf Anpassungen, beispielsweise an neue Filtereinrichtungstypen, vornehmen zu können.

Die Auswerteeinrichtung 24 könnte prinzipiell extern vom Filtergerät 1 plaziert sein und über geeignete Kommunikationsmittel mit der Differenzdruck-Sensoreinrichtung 25, der Durchfluß-Sensoreinrichtung 26 und der Detektionseinrichtung 52 in Verbindung stehen. Eine wesentlich kompaktere und übersichtliche Anordnung zeigt das Ausführungsbeispiel, bei dem die Auswerteeinrichtung 27 als unmittelbarer Bestandteil des Filtergerätes 1 ausgeführt ist. Es befindet sich in einem an das Gehäuse des Filtergerätes 1 vorzugsweise lösbar angesetzten Kommunikationsmodul 54, das über eine erste Schnittstelle 55 zur Verbindung mit dem Gehäuse des Filtergerätes und den darin enthaltenen Elektronikbestandteilen und über eine zweite Schnittstelle 56 zur Verbindung mit einer externen elektronischen Steuereinrichtung 31 verfügt. Diese Steuereinrichtung 31 kann eine speicherprogrammierbare Steuereinrichtung (SPS) sein, die maschinelle Abläufe von an das Druckluftnetz angeschlossenen Verbrauchern steuert und in der unter anderem die Meldesignale 33 berücksichtigt werden können.

Die elektronische Auswerteeinrichtung 27 könnte auch als fester integraler Bestandteil des Filtergerätes ausgebildet sein. Ist das Filtergerät 1 als modularer Bestandteil einer Wartungseinheit ausgeführt, könnte sich die Auswerteeinrichtung 27 auch an anderer Stelle der Wartungseinheit befinden, beispielsweise an oder in einem der anderen wartungsgeräte. Schließlich könnte die Auswerteeinrichtung 27 auch Bestandteil eines eigenständigen Moduls einer Wartungseinheit sein. 1
Die Auswerteeinrichtung 27 kann steuerungstechnisch mit elektronischen Bestandteilen anderer Wartungsgeräte einer Wartungseinheit verknüpft sein. Sie könnte hierbei in einen internen Datenbus eingeschaltet sein. Ferner kann die Auswerteeinrichtung 27 eine nicht näher dargestellte Feldbusstation beinhalten, die eine Kommunikation mit der Steuereinrichtung 31 über serielle Signale ermöglicht, wobei ein Signal- und Datenaustausch in beiden Richtungen realisierbar ist.

Die oben schon angesprochene Detektionseinrichtung 52 des Filtergerätes 1 hat beim Ausführungsbeispiel einen Aufbau dahingehend, daß sie die Erkennung des Typs der momentan installierten Filtereinrichtung 6 ermöglicht und ein vom detektierten Filtereinrichtungstyp abhängiges Detektionssignal hervorrufen kann, das beim Ausführungsbeispiel als zweites Selektionssignal 48 zu der Auswahleinrichtung 46 geleitet wird. Darüberhinaus ist die Detektionseinrichtung 52 in der Lage, das Vorhandensein und Nichtvorhandensein einer Filtereinrichtung am Filtergerät 1 zu detektieren und auch hier mindestens ein vom detektierten Ergebnis abhängiges elektrisches Detektionssignal hervorzurufen. Dabei ist zu erwähnen, daß die Detektionseinrichtung 52 und die zur Erkennung des Verschmutzungsgrades einer Filtereinrichtung 6 dienenden Erkennungsmittel 24 nicht notwendigerweise gleichzeitig vorhanden sein müssen, sondern sich jeweils auch allein und unabhängig voneinander in einem Filtergerät 1 realisieren lassen. Eine elektronische Auswerteeinrichtung 27 ist jedoch vorzugsweise auch beim Fehlen besagter Erkennungsmittel 24 vorhanden, die dann allerdings im Vergleich zum oben beschriebenen Ausbau in etwas "abgespeckter" Form ausgeführt sein kann, so daß zumindest eine Auswertung der hervorgerufenen Detektionssignale möglich ist. Im übrigen kann die kommunikative Verknüpfung und Plazierung der elektronischen Auswerteeinrichtung 27 im Zusammenhang mit einer Detektionseinrichtung 52 derjenigen entsprechen, wie sie oben anhand der Erkennungsmittel 24 erläutert wurde.

Beim vorliegenden Ausführungsbeispiel verfügt die Detektionseinrichtung 52 über an der installierten oder zu installierenden Filtereinrichtung 6 vorgesehene Aktivierungsmittel 57, die zumindest bei installierter Filtereinrichtung 6 direkt oder indirekt mit gehäuseseitigen Sensormitteln 58 zusammenarbeiten, um ein weiterverwertbares elektrisches Detektionssignal zu erzeugen. Das Ausführungsbeispiel zeigt eine Variante mit indirekter Kooperation zwischen den Aktivierungsmitteln 57 und den Sensormitteln 58, und zwar unter Zwischenschaltung einer besonderen Signalübertragungseinrichtung 62, die als wesentlichen Bestandteil einen in der Installationsund Deinstallationsrichtung 21, 22 der Filtereinrichtung 6 relativ zu den am Gehäuse fixierten Sensormitteln 58 verschiebbaren Stößel 63 enthält.

Der Stößel 63 ist beim Ausführungsbeispiel im Grundkörper 2 axial verschiebbar geführt, der hierzu über eine zum Filterraum 5 hin offene längliche Stößelaufnahme 64 verfügt, die den Abströmabschnitt 8 des Fluid-Hauptkanals 14 durchquert. Der Stößel 63 ist vom Filterraum 5 her in die Stößelaufnahme 64 eingesetzt, die im übrigen an ihrem dem Kopfstück 4 zugewandten Ende durch eine Abschlußwand 65 dicht verschlossen ist. Auf diese Weise ist gewährleistet, daß das im Fluid-Hauptkanal 14 strömende Druckmedium ohne besondere Abdichtmaßnahmen an einem Austritt durch die Stößelaufnahme 64 hindurch gehindert ist.

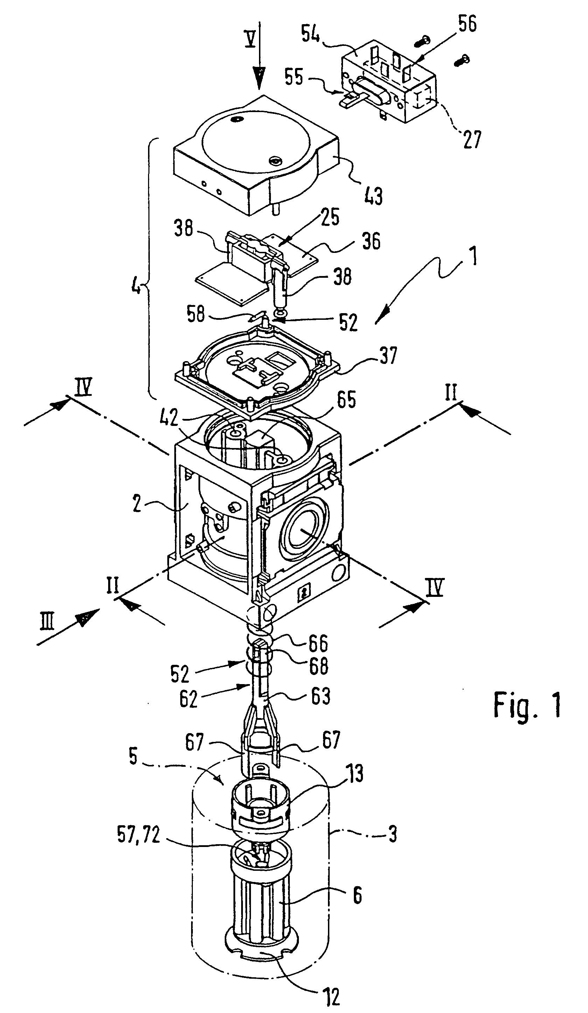

Bei der Montage wird nach dem Einsetzen des Stößels 63 das Befestigungsteil 13 angebracht, das den Stößel 63 an einem Entweichen zum Filterraum 5 hin hindert. Durch eine zwischen dem Stößel 63 und dem Gehäuse des Filtergerätes 1 wirkende, sich zweckmäßigerweise zwischen dem Stößel 63 und dem Grundkörper 2 abstützende Rückstell-Federeinrichtung 66 wird der Stößel 63 in Richtung einer Ausgangsstellung vorgespannt, die er bei entfernter Filtereinrichtung 6 einnimmt. Er stützt sich dabei in Richtung zum Filterraum 5 an dem Befestigungsteil 13 ab, das er aber gleichzeitig mit einem oder mehreren sich axial erstreckenden Antriebspartien 67 zum Filterraum 5 hin durchsetzt. Die Antriebspartien 67 können gemäß Figur 1 flügelartig ausgeführt sein.

Die Sensormittel 58 sind im Verschiebebereich des Stößels 63 plaziert und sitzen beim Ausführungsbeispiel im Bereich der Abschlußwand 65, wobei sie dem zugeordneten Ende der Stößelaufnahme 64 außerhalb dieser axial vorgelagert sind. Sie befinden sich im Innern des Kopfstückes 4, wobei sie an der gegebenenfalls auch mit einer Differenzdruck-Sensoreinrichtung 25 ausgestatteten Tragplatte 36 fixiert sind. Über nicht näher dargestellte elektrische Leiter stehen die Sensormittel 58 mit der Auswerteeinrichtung 27 in Verbindung. Beim Ausführungsbeispiel sind die Sensormittel 58 als magnetisch aktivierbare Sensormittel ausgeführt, beispielsweise in Gestalt eines sogenannten Reed-Schalters.

An dem Stößel 63 sind Betätigungsmittel 68 vorgesehen, die bei der Verlagerung des Stößels 63 mitbewegt werden. Sie sind beim Ausführungsbeispiel als Permanentmagnetmittel ausgeführt, die an den dem Kopfstück 4 zugewandten Ende des Stößels 63 angeordnet sind.

Die Aktivierungsmittel 57 sind beim Ausführungsbeispiel von einer Beaufschlagungsfläche 72 gebildet, die an der in der Installationsrichtung 21 orientierten Stirnseite der Filtereinrichtung 6 vorgesehen ist. Beim Installieren der Filtereinrichtung 6 drückt diese mit der Beaufschlagungsfläche 72 gegen die Antriebspartien 67 des Stößels 63 und verlagert diesen entgegen der Kraft der Rückstell-Federeinrichtung 66 in der Stößelaufnahme 64 in Richtung zum Kopfstück 4, wobei sich die permanentmagnetischen Betätigungsmittel 68 an die magnetfeldempfindlichen Sensormittel 58 annähern, die spätestens bei Erreichen der gewünschten Endposition der Filtereinrichtung 6 ein elektrisches Detektionssignal hervorrufen. Dieses Detektionssignal kann als Bestätigungssignal herangezogen werden, um einer Steuereinrichtung 61 die korrekte Installation einer Filtereinrichtung 6 zu bestätigen, so daß diese die Inbetriebnahme von an das Druckluftnetz angeschlossenen Verbrauchern in die Wege leiten kann.

Alternativ zu der beschriebenen magnetischen Detektion könnten auch andere berühungslose Detektionsmaßnahmen vorgesehen sein, beispielsweise optischer Art. Auch ein mechanisches Zusammenwirken zwischen dem Stößel 63 und den Sensormitteln wäre denkbar, die in diesem Falle beispielsweise in Gestalt eines mechanischen Schalters ausgeführt sein könnten.

Bei einer ebenfalls nicht dargestellten Bauform wirken die an der Filtereinrichtung 6 vorgesehenen Aktivierungsmittel 57 unmittelbar mit den gehäuseseitig angeordneten Sensormitteln 58 zusammen, ohne daß eine zusätzliche Signalübertragungseinrichtung zwischengeschaltet wäre.

Es wäre selbstverständlich auch denkbar, die Anordnung so zu treffen, daß ein Detektionssignal bei Nichtvorhandensein einer Filtereinrichtung 6 hervorgerufen wird. Ebenso könnten getrennte Detektionssignale zum einen bei entfernter Filtereinrichtung und zum anderen bei installierter Filtereinrichtung erzeugt werden, was sich beim Ausführungsbeispiel durch mehrere an unterschiedlichen Stellen entlang der Verlagerungsbahn der permanentmagnetischen Betätigungsmittel 68 plazierte magnetfeldempfindliche Sensoren realisieren ließe. Vergleichbares könnte auch durch Installation eines mehrstufigen oder mehrerer einzelner mechanischer Schalter erreicht werden.

Die Detektionseinrichtung 52 kann, wie erwähnt, auch dahingehend ausgelegt sein, daß sie den momentan installierten Filtereinrichtungstyp konkret erkennt. Das entsprechende Detektionssignal kann dann sowohl als reines Bestätigungssignal für das Vorhandensein bzw. Nichtvorhandensein einer Filtereinrichtung 6 verwendet werden, als auch zur Veranlassung filtertypsspezifischer Maßnahmen. Erreichen läßt sich dieses Detektionsverhalten beispielsweise dadurch, daß man in Abhängigkeit vom eingesetzten Filtereinrichtungstyp unterschiedlich große Auslenkungen des Stößels 63 vorsieht und somit praktisch eine vom Hubweg des Stößels 63 abhängige Signalabgabe erhält.

Ein sehr einfache Maßnahme zur Realisierung der verschiedenen Hubwege des Stößels 63 besteht darin, die an den einzelnen Filtereinrichtungen 6 vorgesehenen Beaufschlagungsflächen 72 in voneinander abweichender Weise anzuordnen und/oder auszugestalten. So könnten die Beaufschlagungsflächen 72, bezogen auf die Installations- und Deinstallationsrichtung 21, 22, im installierten Zustand der jeweiligen Filtereinrichtung 6 gesehen, unterschiedlich positioniert sein, also mit mehr oder weniger großem Abstand zum Grundkörper 2 plaziert sein. Der Stößel 63 wird dann je nach Filtereinrichtungstyp über eine kürzere oder längere Wegstrecke in Richtung zum Kopfstück 4 verlagert. Durch Verwendung von Sensormitteln 58, die sich aus mehreren entsprechend positionierten Einzelsensoren zusammensetzen oder die über ein mehrstufiges Sensierverhalten verfügen, lassen sich dann die entsprechenden Filtereinrichtungstypen 6 problemlos feststellen. Man könnte mit anderen Worten die Betätigungsmittel 68 und die Sensormittel 58 in Gestalt einer beliebigen Positionserfassungseinrichtung ausführen, wobei man auch auf ein analoges Wegmeßsystem zurückgreifen könnte, um eine sehr zuverlässige Positionserfassung zu ermöglichen.

Die Aktivierungsmittel 57 müssen nicht notwendigerweise direkt an der Filtereinrichtung 6 vorgesehen sein. Eine anderweitige Zuordnung zur betreffenden Filtereinrichtung 6 wäre ebenfalls denkbar, beispielsweise durch Integration in die Befestigungsschraube 7 in Verbindung mit Filtereinrichtungen 6, die typabhängig über unterschiedliche Baulängen verfügen. Auf diese Weise erfolgt je nach Filtereinrichtungstyp 6 eine unterschiedliche Einschraubtiefe der Befestigungsschraube 7, was wiederum zur Aktivierung der Sensormittel herangezogen werden kann. In allen Fällen hat die Einbeziehung einer Signalübertragungseinrichtung 62 den Vorteil, daß im Abfragebereich weder hohe Feuchtigkeit noch ein Überdruck herrschen, so daß keine besonderen Schutzmaßnahmen getroffen werden müssen.

Die Positionsabfrage der Aktivierungsmittel 57 bzw. der von diesen aktivierten Betätigungsmittel 72 kann unter den oben erwähnten grundsätzlichen Prinzipien in zahlreichen Varianten ausgeführt werden, wobei an dieser Stelle nur einige Möglichkeiten exemplarisch aufgeführt werden sollen. So könnte man beispielsweise einen oder mehrere Mikroschalter vorsehen, die direkt oder mit Hebelunterstützung mechanisch betätigt werden. Dabei könnten seitlich anfahrbare Mikroschalter verwendet werden. Desweiteren wären Schiebeschalter mit entsprechen der Anzahl der zu detektierenden Filtereinrichtungen 6 ausgeführter Anzahl von Schaltstellungen denkbar, desgleichen Federkontaktschalter.

Greift man auf eine optische Abfrage der Position zurück, könnte man sich das Prinzip der Gabellichtschranke oder das sogenannte Triangulationsprinzip zu Nutze machen.

Im übrigen muß die Positionsabfrage in Verbindung mit einem Stößel 63 nicht notwendigerweise am Stößelende erfolgen, sondern kann auch an beliebiger Längsposition entlang des Stößels stattfinden. Eine solche Variante empfiehlt sich vor allem dann, wenn die Rückstell-Federeinrichtung 66 dem Stößel 63 vorgelagert ist und sich zwischen dessen Stirnseite und der Abschlußwand 65 abstützt, so daß die am Stößel 63 vorgesehenen Betätigungsmittel 68 nicht nahe genug an die außerhalb der Abschlußwand 65 plazierten Sensormittel heranfahren könnten.

Durch die geschilderten Maßnahmen läßt sich bei Bedarf ein Filtergerät realisieren, das notwendige Inspektionsintervalle selbsttätig anzeigt, so daß notwendige Inspektions- und Reinigungsmaßnahmen nur bei tatsächlichem Bedarf erfolgen. Bei der Kommunikation mit einer externen Steuereinrichtung können gängige Kommunikationsmittel zum Einsatz gelangen, unter anderem auch Infrarot- oder Funkübertragungsarten, so daß sich der Verschmutzungsgrad bzw. die Standzeit der momentan eingesetzten Filtereinrichtung 6 auf dem Wege einer Fernabfrage ermitteln läßt.

## Patentansprüche

1. Filtergerät zum Filtern von Druckluft, mit einem zwischen einem Einlaß (15) und einem Auslaß (16) verlaufenden Fluid-Hauptkanal (14), der durch eine im Betrieb von Druckluft durchströmte Filtereinrichtung (6) in einen Zuströmabschnitt (17) und einen Abströmabschnitt (18) unterteilt wird, und mit Mitteln (24) zur Erkennung des Verschmutzungsgrades der Filtereinrichtung (6), die eine den Differenzdruck zwischen dem Zuströmabschnitt (17) und dem Abströmabschnitt (18) erfassende Differenzdruck-Sensoreinrichtung (25) und eine die Durchflußrate im Fluid-Hauptkanal (14) erfassende Durchfluß-Sensoreinrichtung (26) enthalten, und die über eine die erfaßten Differenzdruck- und Durchflußwerte zu einem für den Verschmutzungsgrad der Filtereinrichtung (6) relevanten und mit vorgegebenen Grenzwerten zu vergleichenden Zustandswert verknüpfende elektronische Auswerteeinrichtung (27) verfügen, **gekennzeichnet durch** ein Gehäuse mit einem den Einlaß (15) und den Auslaß (16) aufweisenden Grundkörper (2), an dessen Unterseite unter Abdichtung lösbar eine Filterschale (3) angeordnet ist, die gemeinsam mit dem Grundkörper (2) einen die Filtereinrichtung (6) aufnehmenden Filterraum (5) begrenzt, wobei oben auf den Grundkörper (2) ein die Differenzdruck-Sensoreinrichtung (25) enthaltendes Kopfstück (4) aufgesetzt ist.

2. Filtergerät nach Anspruch 1, **dadurch gekennzeichnet, daß** die Auswerteeinrichtung (27) eine den Vergleich zwischen dem ermittelten Zustandswert und den vorgegebenen Grenzwerten durchführende Vergleichseinrichtung (45) enthält.

3. Filtergerät nach Anspruch 1 oder 2, **dadurch gekennzeichnet, daß** die Auswerteeinrichtung (27) eine Speichereihrichtung (28) zum Abspeichern der mindestens einem Filtereinrichtungstyp zugeordneten Grenzwerte enthält.

4. Filtergerät nach Anspruch 3, **dadurch gekennzeichnet, daß** in der Speichereinrichtung (28) Grenzwerte für mehrere unterschiedliche Filtereinrichtungstypen abgespeichert sind und daß eine Auswahleinrichtung (46) zur typspezifischen Grenzwertselektion vorhanden ist.

5. Filtergerät nach Anspruch 4, **dadurch gekennzeichnet, daß** die Auswahleinrichtung (46) manuell betätigbar ist und beispielsweise eine Schalteranordnung und/oder eine Potentiometeranordnung enthält.

6. Filtergerät nach Anspruch 4 oder 5, **dadurch gekennzeichnet, daß** eine Detektionseinrichtung (52) mit Mitteln zur Erkennung des momentan installierten Filtereinrichtungstyps vorhanden ist, die ein filtereinrichtungstypspezifisches elektrisches Detektionssignal hervorruft, das in der Auswahleinrichtung (46) für die typspezifische Grenzwertselektion herangezogen wird.

7. Filtergerät nach Anspruch 6, **dadurch gekennzeichnet, daß** die Detektionseinrichtung (52) über der Filtereinrichtung (6) zugeordnete Aktivierungsmittel (57) verfügt, die bei installierter Filtereinrichtung (6) zur Erzeugung eines Detektionssignales direkt oder indirekt mit gehäuseseitigen Sensormitteln (58) zusammenarbeiten.

8. Filtergerät nach Anspruch 7, **gekennzeichnet durch** mechanisch aktivierbare Sensormittel (58), beispielsweise in Gestalt mechanischer Schalter, oder **durch** berührungslos, beispielsweise optisch oder magnetisch, aktivierbare Sensormittel (58).

9. Filtergerät nach einem der Ansprüche 1 bis 8, **dadurch gekennzeichnet, daß** die Mittel (24) zur Erkennung des Verschmutzungsgrades der Filtereinrichtung (6) eine den im Zuströmabschnitt (17) des Fluid-Hauptkanals (14) herrschenden Eingangsdruckwert erfassende Eingangsdruck-Sensoreinrichtung (35) enthalten, wobei der ermittelte Eingangsdruckwert in der elektronischen Auswerteeinrichtung (27) bei der Ermittlung des momentanen Zustandswertes berücksichtigt wird.

10. Filtergerät nach Anspruch 9, **dadurch gekennzeichnet, daß** in einer Speichereinrichtung (28) für einen oder mehrere Filtereinrichtungstypen jeweils eingangsdruckabhängig unterschiedliche Grenzwerte abgespeichert sind, die unter Vermittlung einer Auswahleinrichtung (46) eingangsdruckabhängig selektierbar sind.

11. Filtergerät nach einem der Ansprüche 1 bis 10, **dadurch gekennzeichnet, daß** eine eine variable Vorgabe der einer Filtereinrichtung (6) zugeordneten Grenzwerte ermöglichende Vorgabeeinrichtung (53) vorhanden ist.

12. Filtergerät nach einem der Ansprüche 1 bis 11, **dadurch gekennzeichnet, daß** eine Meldeeinrichtung (32) zum Melden des aktuellen Zustandswertes und/oder zum Melden des Erreichens oder Überschreiten der der betreffenden Filtereinrichtung (6) zugeordneten Grenzwerte vorhanden ist.

13. Filtergerät nach einem der Ansprüche 1 bis 12, **dadurch gekennzeichnet, daß** die Grenzwerte für eine jeweilige Filtereinrichtung in Gestalt einer Grenzwert-Kennlinie oder eines Grenzwert-Kennlinienfeldes vorliegen.

14. Filtergerät nach einem der Ansprüche 1 bis 13, **dadurch gekennzeichnet, daß** zusätzlich ein vorgesehener Grenzwert in Form eines durchflußunabhängigen maximalen Differenzdruckwertes vorliegt.

15. Filtergerät nach einem der Ansprüche 1 bis 14, **dadurch gekennzeichnet, daß** die Auswerteeinrichtung (27) als unmittelbarer Bestandteil des Filtergerätes (6) oder einer das Filtergerätes (6) enthaltenden Druckluft-Wartungseinheit ausgeführt ist.

16. Filtergerät nach einem der Ansprüche 1 bis 15, **dadurch gekennzeichnet, daß** die Auswerteeinrichtung (27) mit einer Steuereinrichtung (31) in Verbindung steht, beispielsweise mit einer speicherprogrammierbaren Steuereinrichtung (SPS).

## Claims

1. Filter unit for the filtering of compressed air, with a main fluid passage (14) running between an inlet (15) and an outlet (16) and divided by a filter device (6), through which compressed air flows in operation, into an inflow section (17) and an outflow section (18), and with means (24) of detecting the degree of contamination of the filter device (6) containing a differential pressure sensor device (25) detecting the differential pressure between the inflow section (17) and the outflow section (18), and a flow sensor device (26) which records the flow rate in the main fluid passage (14), and which have an electronic evaluation device (27) which links the recorded differential pressure and flow rate values to give a status value relevant to the degree of contamination of the filter device (6) and for comparison with preset limit values, **characterised by** a housing with a base body (2) containing the inlet (15) and the outlet (16) and on the underside of which there is mounted, releasably with sealing, a filter reservoir (3) which together with the base body (2) bounds a filter chamber (5) accommodating the filter device (6), while a head piece (4) containing the differential pressure sensor device (25) is fitted on top of the base body (2).

2. Filter unit according to claim 1, **characterised in that** the evaluation device (27) contains a comparator device (45) for making the comparison between the determined status value and the preset limit values.

3. Filter unit according to claim 1 or 2, **characterised in that** the evaluation device (27) contains a memory device (28) for storing the limit values assigned to one or more filter device types.

4. Filter unit according to claim 3, **characterised in that** limit values for several different filter device types are stored in the memory device (28), and that there is a selector device (46) for type-specific limit value selection.

5. Filter unit according to claim 4, **characterised in that** the selector device (46) may be operated manually and contains for example a switch assembly and/or a potentiometer assembly.

6. Filter unit according to claim 4 or 5, **characterised in that** there is provided a detection device (52) with means of detecting the currently installed filter device type, and which generates an electrical detection signal, specific to the filter device type, which is used in the selector device (46) for the type-specific limit value selection.

7. Filter unit according to claim 6, **characterised in that** the detection device (52) has activation means (57) assigned to the filter device (6) which, with the filter device (6) installed, work directly or indirectly in conjunction with housing-side sensor means (58) to generate a detection signal.

8. Filter unit according to claim 7, **characterised by** sensor means (58) which may be activated mechanically, for example in the form of mechanical switches, or by noncontact sensor means (58) which may be activated for example optically or magnetically.

9. Filter unit according to any of claims 1 to 8, **characterised in that** the means (24) of detecting the degree of contamination of the filter device (6) contain an input pressure sensor device (35) which detects the input pressure value prevailing in the inflow section (17) of the main fluid passage (14), with the input pressure value determined being taken into account by the electronic evaluation device (27) in determining the momentary status value.

10. Filter unit according to claim 9, **characterised in that** different limit values for one or more filter device types, in each case independent of input pressure, may be stored in a memory device (28), and may be selected independently of input pressure through the agency of a selector device (46).

11. Filter unit according to any of claims 1 to 10, **characterised in that** there is provided a presetting device (53) allowing variable presetting of the limit values assigned to a filter device (6).

12. Filter unit according to any of claims 1 to 11, **characterised in that** there is provided a reporting device (32) for reporting the current status value and/or for reporting the reaching or exceeding of the limit values assigned to the filter device (6) concerned.

13. Filter unit according to any of claims 1 to 12, **characterised in that** the limit values for any particular filter device are available in the form of a limit value characteristic or a limit value family of characteristics.

14. Filter unit according to any of claims 1 to 13, **characterised in that** there is also provided a limit value in the form of a maximum differential pressure value independent of flow.

15. Filter unit according to any of claims 1 to 14, **characterised in that** the evaluation device (27) is provided as a direct component of the filter device (6) or of a compressed air conditioner unit containing the filter device (6).

16. Filter unit according to any of claims 1 to 15, **characterised in that** the evaluation device (27) is connected to a control device (31), for example to a programmable logic controller (PLC).

## Revendications

1. Appareil de filtration pour filtrer de l'air comprimé, comportant un canal principal de fluide (14) s'étendant entre une entrée (15) et une sortie (16), lequel est divisé, par un dispositif de filtration (6) traversé pendant le fonctionnement par l'air comprimé, en un tronçon d'arrivée (17) et un tronçon d'évacuation (18), et comportant des moyens (24) pour détecter le degré d'encrassement du dispositif de filtration (6), lesquels contiennent un dispositif de détection de la pression différentielle (25) détectant la pression différentielle entre le tronçon d'arrivée (17) et le tronçon d'évacuation (18), ainsi qu'un dispositif de détection du débit (26) détectant le débit dans le canal principal de fluide (14), et comportent un dispositif électronique d'exploitation (27) corrélant les valeurs détectées de la pression différentielle et du débit à une valeur d'état significative du degré d'encrassement du dispositif de filtration (6) et à comparer à des valeurs limites prédéfinies, **caractérisé par** un boîtier avec un corps de base (2) comportant l'entrée (15) et la sortie (16), sur la face inférieure duquel est disposée avec étanchéité et de manière séparable une cuvette de filtration (3) qui délimite, avec le corps de base (2), une chambre de filtration (5) recevant le dispositif de filtration (6), une pièce de tête (4), contenant le dispositif de détection de la pression différentielle (25), étant placée à la partie supérieure sur le corps de base (2).

2. Appareil de filtration selon la revendication 1, **caractérisé en ce que** le dispositif d'exploitation (27) contient un dispositif de comparaison (45) exécutant la comparaison entre la valeur d'état déterminée et les valeurs limites prédéfinies.

3. Appareil de filtration selon la revendication 1 ou 2, **caractérisé en ce que** le dispositif d'exploitation (27) contient un dispositif de mémorisation (28) pour mémoriser les valeurs limites affectées à au moins un type de dispositif de filtration.

4. Appareil de filtration selon la revendication 3, **caractérisé en ce que** dans le dispositif de mémorisation (28) sont mémorisées des valeurs limites pour plusieurs types de dispositifs de filtration différents et **en ce qu'**il est prévu un dispositif de sélection (46) pour la sélection de valeurs limites spécifiques à chaque type.

5. Appareil de filtration selon la revendication 4, **caractérisé en ce que** le dispositif de sélection (46) peut être actionné manuellement et contient par exemple un dispositif à interrupteur et/ou un dispositif à potentiomètre.

6. Appareil de filtration selon la revendication 4 ou 5, **caractérisé en ce qu'**il est prévu un dispositif de détection (52) avec des moyens pour reconnaître le type de dispositif de filtration momentanément installé, qui provoque un signal électrique de détection spécifique du type de dispositif de filtration, lequel signal est utilisé dans le dispositif de sélection (46) pour la sélection de valeurs limites spécifiques à chaque type.

7. Appareil de filtration selon la revendication 6, **caractérisé en ce que** le dispositif de détection (52) comporte des moyens d'activation (57) associés au dispositif de filtration (6), au-dessus de celui-ci, lesquels coopèrent directement ou indirectement avec des moyens de détection (58) côté boîtier, pour produire un signal de détection, lorsque le dispositif de filtration (6) est installé.

8. Appareil de filtration selon la revendication 7, **caractérisé par** des moyens de détection (58) activables mécaniquement, par exemple sous la forme d'interrupteurs mécaniques, ou par des moyens de détection (58) activables sans contact, par exemple optiquement ou magnétiquement.

9. Appareil de filtration selon l'une des revendications 1 à 8, **caractérisé en ce que** les moyens (24) de détection du degré d'encrassement du dispositif de filtration (6) contiennent un dispositif de détection de la pression d'entrée (35) détectant la valeur de la pression d'entrée régnant dans le tronçon d'entrée (17) du canal principal de fluide (14), la valeur déterminée de la pression d'entrée étant prise en compte dans le dispositif électronique d'exploitation (27) lors de la détermination de la valeur d'état momentanée.

10. Appareil de filtration selon la revendication 9, **caractérisé en ce que** dans un dispositif de mémorisation (28) sont mémorisées, pour un ou plusieurs types de dispositifs de filtration, des valeurs limites respectives différentes dépendant de la pression d'entrée, qui peuvent être sélectionnées en fonction de la pression d'entrée par l'intermédiaire d'un dispositif de sélection (46).

11. Appareil de filtration selon l'une des revendications 1 à 10, **caractérisé en ce qu'**il est prévu un dispositif de présélection (53) permettant une présélection variable des valeurs limites affectées à un dispositif de filtration (6).

12. Appareil de filtration selon l'une des revendications 1 à 11, **caractérisé en ce qu'**il est prévu un dispositif de signalisation (32) pour signaler la valeur d'état actuelle et/ou pour signaler que les valeurs limites affectées au dispositif de filtration (6) concerné sont atteintes ou dépassées.

13. Appareil de filtration selon l'une des revendications 1 à 12, **caractérisé en ce que** les valeurs limites pour chaque dispositif de filtration sont disponibles sous la forme d'une courbe caractéristique de valeur limite ou d'un ensemble de courbes caractéristiques de valeur limite.

14. Appareil de filtration selon l'une des revendications 1 à 13, **caractérisé en ce qu'**il est prévu en outre une valeur limite prédéterminée sous la forme d'une valeur maximale de la pression différentielle indépendante du débit.

15. Appareil de filtration selon l'une des revendications 1 à 14, **caractérisé en ce que** le dispositif d'exploitation (27) est réalisé comme partie intégrante directe de l'appareil de filtration (6) ou d'une unité d'entretien d'air comprimé contenant l'appareil de filtration (6).

16. Appareil de filtration selon l'une des revendications 1 à 15, **caractérisé en ce que** le dispositif d'exploitation (27) est en liaison avec un dispositif de commande (31), par exemple avec un dispositif de commande programmable à mémoire (SPS).
